# EUROPEAN PATENT APPLICATION

(11) **EP 1 479 750 A1**
(43) Date of publication of application: **24.11.2004**
(21) Application number: 04011650.1
(22) Date of filing: 17.05.2004
(51) Int. Cl.: C10L 5/46, B03B 9/06

(54) **System for the production of refuse-derived fuel**

(30) Priority: 22.05.2003 IT TO20030377
(71) Applicant: VM Press S.r.l., 15076 Ovada (Al) (IT); Conai Consorzio Nationale Imballaggi, 00186 Roma (IT)
(72) Inventor: Gonella, Carlo, 15078 Roccagrimalda (AL) (IT)
(74) Representative: Spandonari, Carlo, Dr. Ing.

(57) **Abstract**

A system for the production of refuse-derived fuel comprises in succession at least one extruding press (PE1, PE2) arranged for being supplied with solid refuse and for separating its moist fraction from its dry fraction, an associated grinder (MU) for receiving and mincing the dry fraction to produce a minced dry material; a sifting screen (V) for receiving the minced dry material and sift it to return a remaining fraction that is substantially free from small-sized, solid inert particles; a multiple separator (SM) for receiving the remaining fraction and granulate it into minced refuse-derived solid fuel.

## Description

### Disclosure

This invention is concerned with a system for the production of refuse-derived fuel.

Solid city refuse, often designated by the acronym SCR, is a material having quite variable characteristic features in respect of its nature (organic or inorganic), firmness, size and composition. It has long been known to collect SCR on a selective basis, i.e. to separately store the various constituent materials (organic matter, glass, paper, metals, etc.), for an easier recycling and a more efficient disposal. Systems are also known for retrieving fuel from the solid city refuse, which systems operate by separating, in a progressive process, combustible matter such as paper, wood, plastic material, in order to obtain refuse-derived fuel in form of a powder or a compacted material such as pellets, lumps, briquettes, etc.

Since the calorific value of the final product depends on how large is its combustible fraction, the above systems attempt to maximize the combustible fraction by means of sophisticated technologies, which involve, however, high costs in the construction, the operation and the maintenance.

It is now the main object of the invention to provide a system for obtaining high-grade fuel from solid city refuse, which system is also capable of separating different materials constituting the refuse (such as organic waste, glass, paper, metals, etc.), with low costs of construction and operation.

Another object of the invention is to provide a system that is more compact than similar known systems, so that it will occupy more limited grounds and so that it will be easier to shield it from the outside environment thereby preventing the diffusion of smells.

The above and other objects and advantages, such as will appear in the following disclosure, are attained by a system for the production of fuel derived from solid city waste having the features recited in claim 1, the dependent claims defining other advantageous features.

The invention will now be disclosed in more detail with reference to a preferred though non-exclusive embodiment, shown by way of non-limiting example in the attached drawings, wherein:

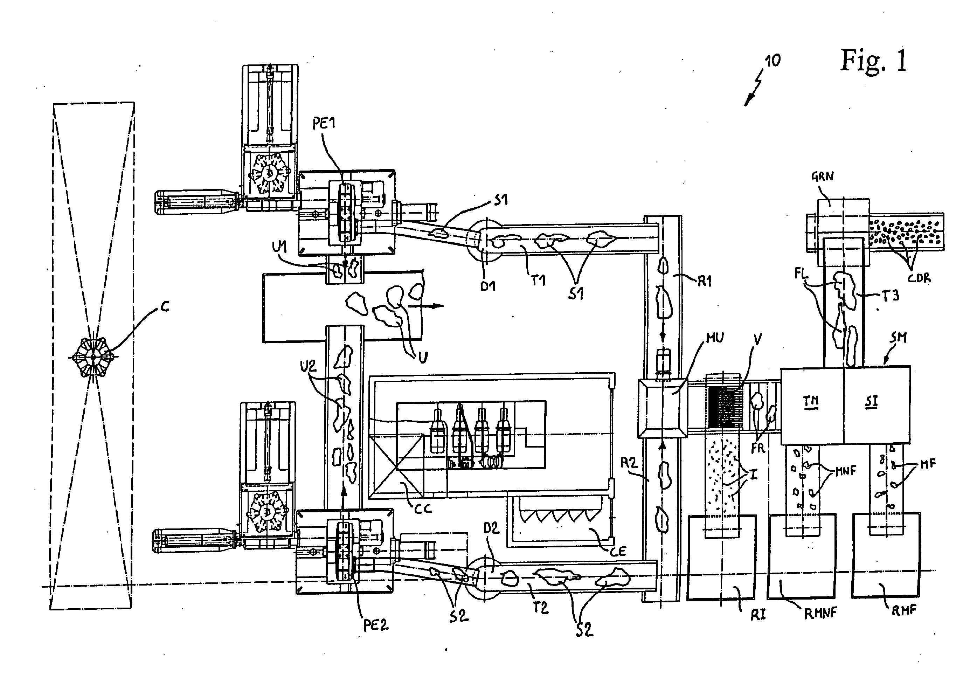

Fig. 1 is a schematic plan view of a system according to the invention;
Fig. 2 is a block diagram illustrating the sequence of processes performed in the system of Fig. 1;
Fig. 3 is a side view of the system of Fig. 1, partly broken-away.

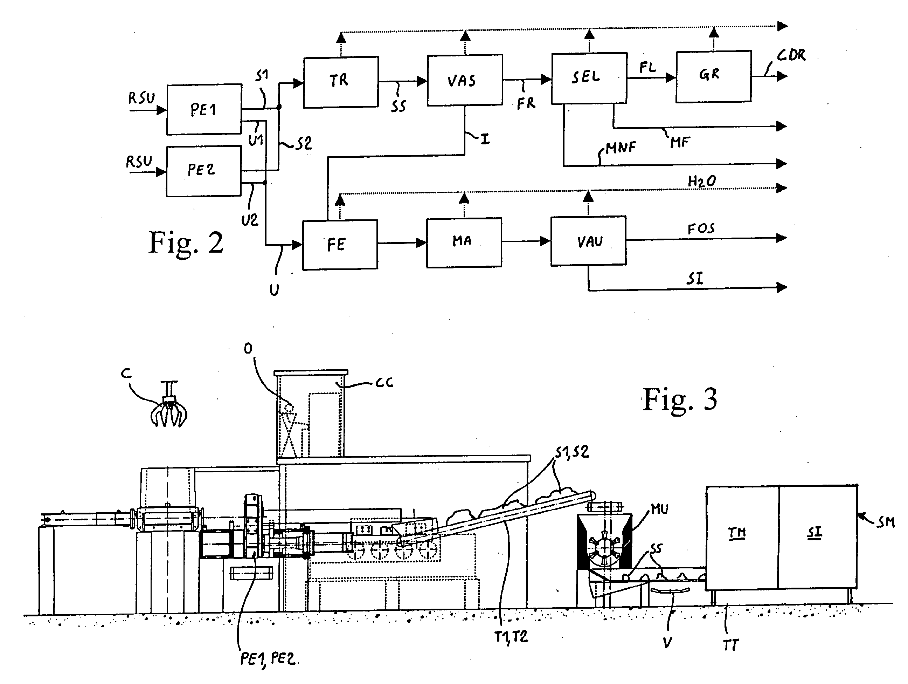

With reference to the above Figures, a system 10 according to the invention, for the production of refuse-derived fuel, comprises a pair of extruding presses PE1, PE2, preferably as described in EP 1 207 040. Presses PE1, PE2 are supplied with huge loads of solid city refuse RSU, such as 150 tonnes/day each, by an overhead crane C, and operate to divide respective moist fractions U1, U2 from dry fractions S1, S2. As shown in in detail in the block diagram of Fig. 2, the overall moist fraction U, making up about 1/3 of the initial flow of SCR, is sent to subsequent steps of fermentation FE, aging MA, and moist-fraction sifting VAU, in order to separate water H2O, an organic fraction FOS, and inert matter SI, according to usual techniques that are well known to a person skilled in the art.

The dry fractions S1, S2 emerging from extruding presses PE1, PE2, making up about 2/3 of the initial flow of SCR, are forwarded by respective belt conveyors T1, T2 to a grinder comprising a hammer mill MU known per se, which performs a mincing step TR in preparation to the next processing steps. Preferably, conveyors T1, T2 comprise two parallel branches, which are provided with intermediate joints D1, D2 allowing the conveyors to be installed around machinery or other obstacles, and which lead into two respective branches R1, R2 feeding mill MU.

The minced dry material SS coming out of hammer mill MU is handled by a vibrating sifting screen V which performs a solid-fraction sifting VAS, thereby separating small-sized, inert solid particles I, which predominantly comprise brittle material such as glass, construction material (brick clay, etc.) and other, from the remaining fraction FR. Particles I are sent to an inert collection station RI. A vibrating screen is preferred for sifting the materials in this case because inert materials I, which have been ground to powder, by moving along the inclined, vibrating screen V, will tend to fall by gravity from the remaining fraction. By contrast, another kind of sifting means such as a trommel screen would allow a considerable part of the powder to be trapped within the perforated trommel, thereby reducing the sifting efficiency.

The last-remaining fraction FR is supplied to a multiple separator SM, which performs a selection step SEL, consisting in dividing ferrous metals MF from non-ferrous metals MNF. These are then forwarded to respective collection stations RMF and RMNF, while delivering at another output a combustible material FL, known as "fluff", and including rubber, cloth, plastics, wood, paper, etc., the fluff being the basic material in the preparation of the refuse-derived fuel CDR.

Multiple separator SM preferably comprises a magnetic-drum separator TM attracting ferrous metals and directing them to the respective collection station, and a downstream induction separator SI for extracting non-ferrous metals.

A conveyor T3 finally conveys the fluff FL to a briquetting station GRN, which performs a granulation step GR by producing uniformly sized briquettes which constitute the refuse-derived fuel CDR. Alternatively to the briquetting station, a pelletizer can be used, which will produce uniformly sized sticks or pellets of fuel.

The operation of system 10 is managed by an operator O from a control booth CC including an electric cabin CE, which is located as desired.

A system as above disclosed achieves the object of the invention by retrieving over 50% in weight of the materials constituting the initial solid city refuse, by converting it to solid fuel having a high calorific power, and, on the other hand, by separating to different groups the inert materials, such as organic matter, glass, paper, metals, etc, at limited costs for construction and operation. Moreover, the system is compact and takes less room, while being easier to shield from the outside environment, thereby limiting the smells originating from the refuse being processed.

A preferred embodiment of the invention has been disclosed, but a person skilled in the art may obviously devise modifications to it within the scope of the same inventive concept.

## Claims

1. A system for the production of refuse-derived fuel, **characterized in that** it comprises in succession:
- at least one extruding press (PE1, PE2), arranged for being supplied with solid refuse (RSU) and to separate its moist fraction (U1, U2, U) from its dry fraction (S1, S2), and having an associated grinder (MU) for receiving and grinding said dry fraction (S1, S2) to a ground dry material (SS),
- a sifting screen (V), for receiving said ground dry material (SS) and sifting it to return a remaining fraction (FR) that is substantially free from small-sized inert solid particles (I),
- a multiple separator (SM), for receiving said remaining fraction (FR), and for extracting metals (MF, MNF) and returning a combustible material (FL), and
- a granulator (GRN), for receiving said combustible material (FL) and for granulating it to deliver minced, refuse-derived solid (CDR).

2. The system of claim 1, **characterized in that** said mill (MU) is arranged downstream of said extruding press (PE1, PE2) whereby it is supplied by it.

3. The system of claim 1, **characterized in that** said mill (MU) is arranged upstream of said extruding press (PE1, PE2) whereby it supplies it.

4. The system of any of claims 1 to 3, **characterized in that** it comprises two of said extruding presses (PE1, PE2).

5. The system of any of claims 1 to 4, **characterized in that** said mill (MU) is a hammer mill (MU).

6. The system of any of claims 1 to 5, **characterized in that** said multiple separator (SM) comprises a magnetic-drum separator (TM) for separating ferrous metals

7. The system of any of claims 1 to 6, **characterized in that** said screen is a vibrating screen (V).

8. The system of any of claims 1 to 7, **characterized in that** said granulator (GRN) is a briquetting machine.

9. The system of any of claims 1 to 7, **characterized in that** said granulator (GRN) is a pelletizing machine.
